# EUROPEAN PATENT APPLICATION

(11) **EP 4 509 968 A1**
(43) Date of publication of application: **19.02.2025**
(21) Application number: 24189209.0
(22) Date of filing: 17.07.2024
(51) Int. Cl.: G06F 3/0484, G06F 3/0488

(54) **DISPLAY CONTROL DEVICE, OPERATION DISPLAY DEVICE AND DISPLAY CONTROL METHOD**

(30) Priority: 21.07.2023 JP 2023119375
(71) Applicant: Schneider Electric Japan Holdings Ltd., Tokyo 108-0023 (JP)
(72) Inventor: TAKASE, Hirofumi, OSAKA, 5410041 (JP); SHIGA, Yoji, OSAKA, 5410041 (JP); MORIMOTO, Takeshi, OSAKA, 5410041 (JP); SEKIGUCHI, Mitsuharu, OSAKA, 5410041 (JP); FUJIOKA, Naoki, OSAKA, 5410041 (JP); CHO, Hyunwoo, OSAKA, 5410041 (JP)
(74) Representative: Plasseraud IP

(57) **Abstract**

An operation display device includes a browsing section that causes a screen to be displayed on a foreground tab which is a page region on a foreground. The browsing section includes: a specifying section configured to specify one or more switching candidate pages on the basis of search words in a search word list that specify the switching candidate pages, the switching candidate pages each being a page to which it is possible to switch a page being displayed on the foreground tab; and a drawing section configured to draw the switching candidate pages specified by the specifying section, on one or more background tabs each of which is provided on a background of the foreground tab.

## Description

### Technical Field

The present invention relates to, for example, a display control device that causes a display device to display a prepared screen.

### Background Art

A display device having a browsing function can switch between a plurality of Web pages in accordance with an operation by a user and display one of the Web pages on the foreground. For example, Patent Document 1 discloses a mobile terminal which acquires a file specified by a link that is set in a hypertext document A being displayed and which then generates, on the basis of the file, a back tab on which another page is caused to be present on the back of a front tab while being hidden by a front tab. The mobile terminal switches a display from the hypertext document A on the front tab being displayed to a hypertext document B on the back tab, in response to a key operation made by a user.

### Citation List

### [Patent Literature]

### [Patent Literature 1]

Japanese Patent Application Publication Tokukai No. 2008-242842

### Summary of Invention

### Technical Problem

The mobile terminal acquires a hypertext document that is present on a back tab as a file specified by the link. Therefore, it is not possible to select a desired hypertext document.

An object of an aspect of the present invention is to select a page to be prepared for switching of a screen.

### Solution to Problem

In order to solve the above problem, a display control device in accordance with an aspect of the present invention includes: a control section configured to control a display device so as to cause a screen to be displayed, by a browsing function, in a first page region which is a page region on a foreground, the control section including: a specifying section configured to specify one or more switching candidate screens on the basis of screen specification information that specifies the switching candidate screens, the switching candidate screens each being a screen to which it is possible to switch the screen being displayed in the first page region; and a drawing section configured to draw the switching candidate screens specified by the specifying section, in one or more second page regions each of which is provided on a background of the first page region.

In order to solve the above problem, a display control method in accordance with an aspect of the present invention is a display control method configured to control a display device so as to cause a screen to be displayed, by a browsing function, in a first page region which is a page region on a foreground, the method including: a specifying step of specifying one or more switching candidate screens on the basis of screen specification information that specifies the switching candidate screens, the switching candidate screens each being a screen to which it is possible to switch the screen being displayed in the first page region; and a drawing step of drawing the switching candidate screens specified in the specifying step, in one or more second page regions each of which is provided on a background of the first page region.

### Advantageous Effects of Invention

An aspect of the present invention makes it possible to select a page to be prepared for switching of a screen.

### Brief Description of Drawings

Fig. 1 is a block diagram illustrating a hardware configuration of an operation display system in accordance with each of Embodiments 1 and 2 of the present invention.
Fig. 2 is a block diagram illustrating a functional configuration of the operation display system in accordance with Embodiment 1 of the present invention.
Fig. 3 is a flowchart showing a procedure of a process in which a switching candidate page that may be displayed is drawn in advance, on a background tab, by a browsing section of the operation display device provided in the operation display system.
Fig. 4 is a diagram illustrating a procedure according to which the operation display device creates an ID list on the basis of a search word list.
Fig. 5 is a flowchart showing a procedure of a process in which the browsing section carries out page switching.
Fig. 6 is a diagram for illustrating page switching.
Fig. 7 is a block diagram illustrating a functional configuration of the operation display system in accordance with Embodiment 2 of the present invention.
Fig. 8 is a flowchart showing a procedure of a process in which a switching candidate page that may be displayed is drawn in advance, on a background tab, by a browsing section of the operation display device illustrated in Fig. 7.
Fig. 9 is a diagram illustrating a procedure according to which the operation display device illustrated in Fig. 7 creates an ID list on the basis of a search word list.

### Description of Embodiments

### Embodiment 1

The following description will discuss Embodiment 1 of the present invention in detail.

### <Hardware configuration of operation display system>

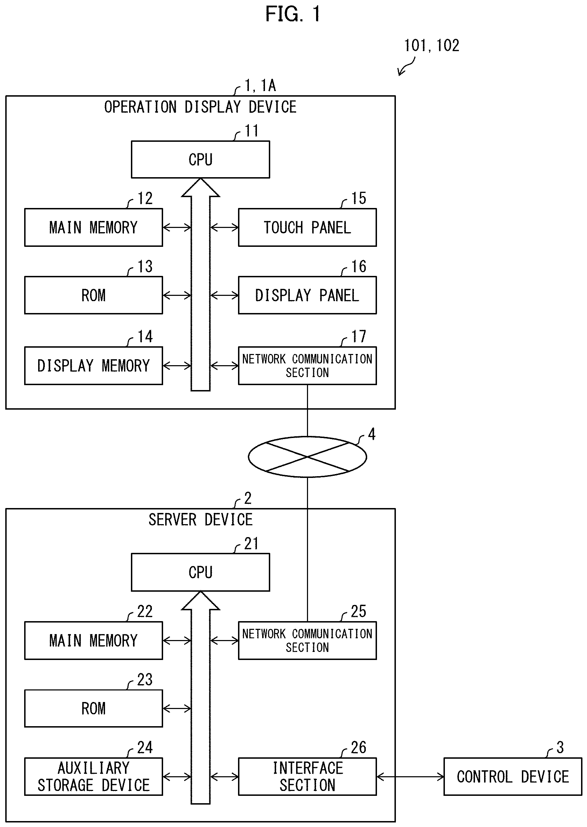

Fig. 1 is a block diagram illustrating a hardware configuration of an operation display system 101 in accordance with Embodiment 1.

As illustrated in Fig. 1, the operation display system 101 includes an operation display device 1, a server device 2, and a control device 3. The operation display device 1 and the server device 2 are connected to a network 4 such as the Internet so as to be capable of communicating with each other.

First, the following will discuss the hardware configuration of the operation display device 1.

The operation display device 1 is an embedded device in which a dedicated operating system (OS) is implemented. The operation display device 1 is a dedicated device that carries out an operation related to the control device 3 and that also realizes a human machine interface (HMI) function by having a browsing function for displaying a Web page (screen) for displaying a state of the control device 3. The operation display device 1 is a computer having improved dust resistance, improved drip proofness, improved vibration resistance, and the like so as to withstand a harsh environment such as a factory.

The operation display device 1 includes a central processing unit (CPU) 11, a main memory 12, a read only memory (ROM) 13, a display memory 14 (memory), a touch panel 15 (operation section), a display panel 16 (display device), and a network communication section 17.

Note that the operation display device 1 may be any device such as a panel computer in which a general-purpose OS is implemented.

The CPU 11 is a processing device that executes a browser program for carrying out the browsing function of the operation display device 1. Specifically, the CPU 11 carries out an instruction notification process, a page acquisition process, and/or the like. The instruction notification process is a process for notifying the server device 2 of the instruction content corresponding to an operation to the touch panel 15 when the browser program is to be executed. The page acquisition process is a process for acquiring, from the server device 2, data (page data) of a Web page when a switching candidate page (described later) is to be drawn in the display memory 14. The page data is configured as a Hypertext Markup Language (HTML) file.

A Web page is a screen containing various objects. The objects are provided for displaying a state of an input/output device connected to the control device 3 and for receiving an operation to the touch panel 15. As the objects, various component images such as a lamp component, a data display component, and a switch component are prepared. The Web page functions, by including the objects, as an HMI screen which realizes the HMI function.

Note that, in the following description, the Web page is simply referred to as a "page". Further, the page appears, to the user of the operation display device 1, as the above-described screen that is displayed on a display surface of the display panel 16. Therefore, the page is referred to as "screen" as necessary in the following description.

The main memory 12 is a memory that constitutes a main storage device of the operation display device 1, and is constituted by a dynamic random access memory (DRAM). The ROM 13 stores, in addition to the operating system (OS), programs essential for an operation of the operation display device 1 such as a basic input/output system (BIOS) that is executed at the startup and reset of the operation display device 1.

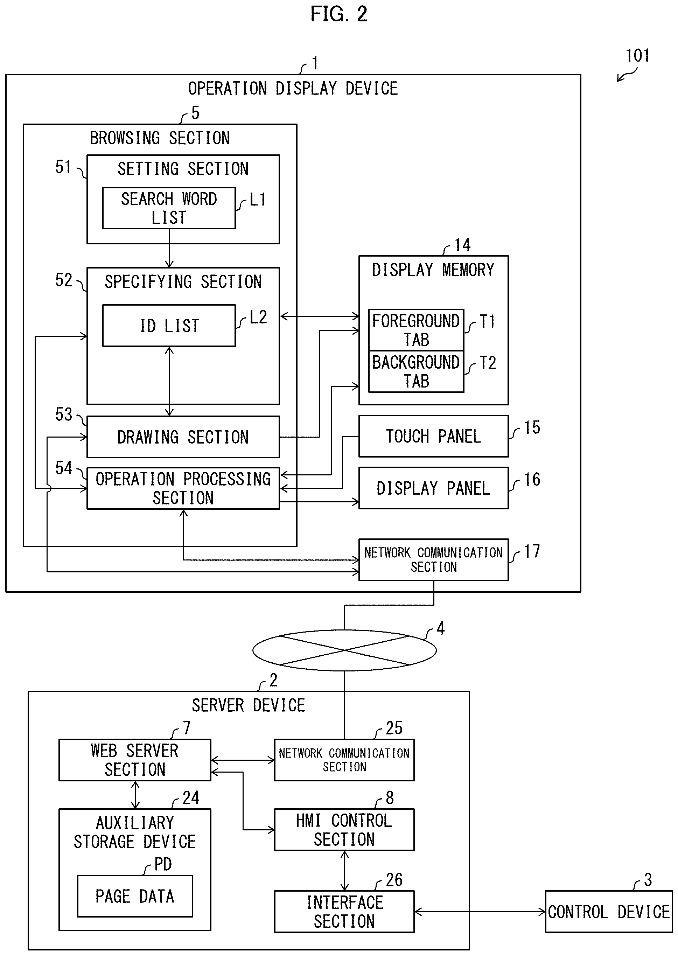

The display memory 14 is a video RAM (VRAM) in which a browsing section 5 (see Fig. 2, described later) loads, on a pixel-by-pixel basis, page data constituting the page to be displayed by the display panel 16. Note that in a case where the display memory 14 is not required to operate at a high speed, the main memory 12 may be provided, in a part thereof, with a region that replaces the display memory 14.

The touch panel 15 receives a touch operation on a page displayed on the display panel 16, and outputs a touch operation signal as an input signal. The touch panel 15 is disposed on the display panel 16, but may be incorporated in the display panel 16.

The display panel 16 is a display device that displays a page based on the page data. The display panel 16 includes a flat display panel such as a liquid crystal display panel or an electro-luminescence (EL) display panel. The display panel 16 is incorporated in a housing that forms an exterior of the operation display device 1, but may be configured separately from the housing.

The network communication section 17 has a function of network communication that is carried out via the network 4.

Next, the following will discuss a hardware configuration of the server device 2.

The server device 2 is configured by a computer in which a general-purpose operating system (OS) is implemented, and is connected to the control device 3 so as to be capable of communicating with the control device 3. The server device 2 has an instruction function, an update function, and/or the like. The instruction function is a function for giving a control instruction to the control device 3 on the basis of the above-described instruction content of which notification is given from the operation display device 1. The update function is a function for updating, in the page data, a state of an input device (described later) on the basis of data which is related to the state of the input device and which is acquired from the control device 3.

The server device 2 includes a central processing unit (CPU) 21, a main memory 22, a read only memory (ROM) 23, an auxiliary storage device 24, a network communication section 25, and an interface section 26.

The CPU 21 is a processing device that executes a Web server program under control of the OS. Specifically, the CPU 21 receives various data from the auxiliary storage device 24, the network communication section 25, the interface section 26, and the like when the Web server program is to be executed. Then, the CPU 21 carries out a predetermined process on the data. Further, the CPU 21 outputs a result of the process to the network communication section 25, the interface section 26, and/or the like.

The main memory 22 is a memory that constitutes a main storage device of the server device 2, and is constituted by a dynamic random access memory (DRAM). The ROM 23 stores, in addition to the OS, programs essential for an operation of the server device 2 such as a basic input/output system (BIOS) that is executed at the startup and reset of the server device 2.

The auxiliary storage device 24 is provided to store various data, in particular, page data PD, that should be held by the server device 2. The auxiliary storage device 24 is configured by a hard disk drive (HHD), a solid state drive (SSD), and the like.

The network communication section 25 has a function of network communication that is carried out via the network 4.

The interface section 26 is a connection section that allows the server 2 to be connected with the control device 3 so as to be capable of communicating with the control device 3. The interface section 26 is equipped, as appropriate, with various interfaces such as a serial interface and a local area network (LAN).

The control device 3 is a device which carries out control. Examples of the control device 3 include a programmable logic controller (PLC), a temperature controller, or a motor controller, and has a communication function. The control device 3 transmits/receives data to/from the input/output devices (not shown). Examples of the input/output device include input devices such as a sensor and a switch, and output devices such as an actuator, a motor, a relay, a solenoid valve, and an indicator. The control device 3 includes a device memory as a memory for storing a state of the input/output device.

### <Functional configuration of operation display system>

Fig. 2 is a block diagram illustrating a functional configuration of the operation display system 101.

First, the following will discuss a functional configuration of the operation display device 1.

As illustrated in Fig. 2, the operation display device 1 includes the browsing section 5 (control section). The browsing section 5 is a function block that is realized by the CPU 11 executing the browser program. The browsing section 5 includes a setting section 51, a specifying section 52, a drawing section 53, and an operation processing section 54 (switching section).

The browsing section 5 draws pages on a plurality of overlapping tabs, in the display memory 14, and controls the display panel 16 so as to cause, by the browsing function, a page to be displayed on a foreground tab T1 (first page region) which is a foreground page region. On the back of the foreground tab T1, at least one background tab T2 (second page region), which is a page region on the background, is provided. The operation display device 1 includes the browsing section 5, and thus functions as a display control device that controls the display panel 16.

The setting section 51 sets page specification information (screen specification information). The page specification information is information for specifying a switching candidate page (switching candidate screen) that is a page to which a page being displayed on the foreground tab T1 can be switched. The setting section 51 sets, for each page, a search word list L1 in which search words serving as the page specification information are put together.

The search word list L1 is a list in which at least some of words that set an object for operating page switching (screen switching) are listed as search words (keywords). The above-described object is, for example, a screen switching switch and is described in page data PD prepared in the server device 2. A link indicating a location of the page data PD of the switching candidate page is set in the above-described object.

The search word list L1 is created by a user who uses the operation display device 1 or a contractor who creates the page data PD. In addition, as preparation for creation of the search word list L1, the setting section 51 may read the page data PD in advance and extract a search word(s) serving as a candidate(s) from the page data PD.

Note that the setting section 51 may create the search word list L1 by extracting the link for the page data PD as the search word(s), instead of the above-described setting of the search word list L1. Since "http:" or "https:" is described at the beginning of the link, the setting section 51 sets the "http:" or "https:" as the search word. This makes it possible to automatically create the search word list L1. Alternatively, the setting section 51 may extract a link or a keyword of a page displayed in the past, and create the search word list L1 on the basis of the link or the keyword thus extracted.

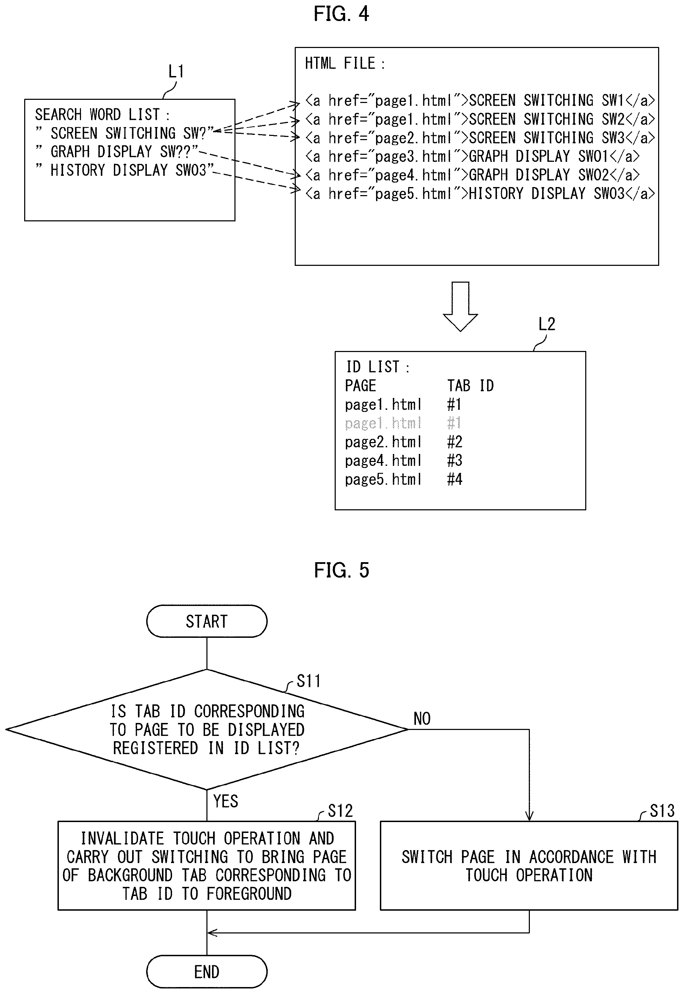

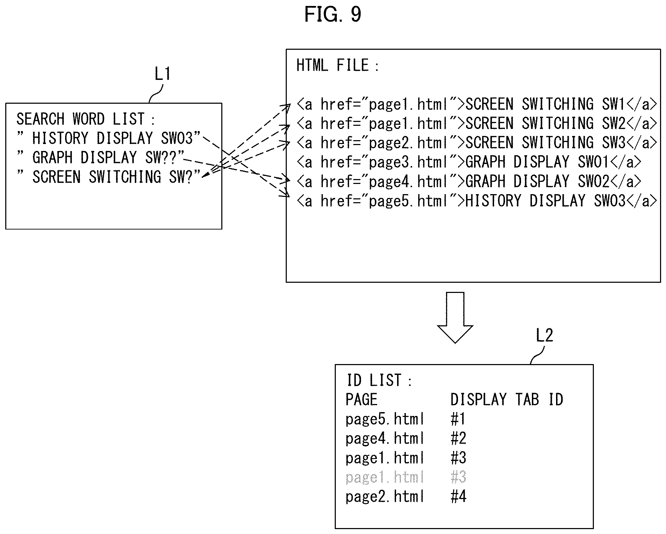

In an example illustrated in Fig. 4, "pageX.html (X = 1, 2, 3, ...)" indicates a link. In the link, "http:" or "https:" described above is omitted. The same applies to an example illustrated in Fig. 9 described later.

The specifying section 52 specifies at least one switching candidate page by the page specification information. Specifically, in a case where a page is to be displayed on the foreground tab T1, the specifying section 52 sets acquisition information for acquiring a switching candidate page in an ID list L2 on the basis of the search words that have been registered in the search word list L1. Then, the specifying section 52 specifies the switching candidate page by the acquisition information. The acquisition information is, for example, a link for page data PD. The specifying section 52 creates the ID list L2 (list) by associating the acquisition information with a tab ID (region specification information) that specifies the background tab T2 on which the switching candidate page is to be drawn.

The drawing section 53 generates the background tab T2 in the display memory 14, acquires the page data PD from the server device 2, and reads the page data PD in the display memory 14. Thereafter, the specifying section 52 registers the tab ID corresponding to the background tab T2 generated. In a case where the tab ID is registered after completion of reading of the page data PD by the drawing section 53, whether or not reading of the page data PD has been completed can be determined by whether the tab ID has been registered in the ID list L2.

Alternatively, the specifying section 52 may register a tab ID corresponding to the background tab T2 generated, when the drawing section 53 generates the background tab T2 in the display memory 14. Alternatively, the specifying section 52 may register the tab ID in advance in the ID list L2 and associate the tab ID with a link.

Note that in the following description, it is assumed that the specifying section 52 registers the tab ID in the ID list L2 after completion of reading of the page data PD by the drawing section 53.

The drawing section 53 generates the background tab T2 in the display memory 14 and draws, on the background tab T2 generated, the switching candidate page specified by the specifying section 52. Specifically, the drawing section 53 acquires the page data PD from the server device 2 on the basis of the acquisition information (link) registered in the ID list L2. Then, on the basis of the page data PD, the drawing section 53 draws a page on the background tab T2 which has been generated in the display memory 14.

The drawing section 53 does not draw the switching candidate page in a case where a predetermined condition is satisfied, whereas the drawing section 53 draws the switching candidate page in a case where the predetermined condition is not satisfied. Examples of the predetermined conditions include a time condition, a display content condition, and a variable condition.

The time condition includes, for example, a condition concerning a read time of the page data PD. Depending on a size of the page data PD of the switching candidate page, a time for reading the page data PD into the display memory 14 differs. Therefore, in a case where a condition that the read time exceeds a predetermined time is satisfied and accordingly, there is a high possibility that the operation display device 1 affects another process which is carried out in parallel with the drawing of the switching candidate page, the drawing section 53 stops reading and does not carry out drawing. In contrast, in a case where the read time is equal to or less than the predetermined time and accordingly, the above condition is not satisfied, the drawing section 53 carries out reading and drawing. Such a condition on the read time is set regardless of the page data PD, but may be set separately for each page data PD.

An example of the display content condition includes a condition that a specific object is disposed on a page. Examples of this condition include the following: a condition that an object that displays important data on the page in real time is disposed; and a condition that a momentary switch component is disposed on the page. In a case where an object that displays important data in real time is disposed on the page, it is necessary to restrict persons who can view that data. In a case where a momentary switch component is disposed on the page, inadvertent operation on the momentary switch may lead to a serious situation.

In a case where the condition that such a specific object is disposed on the page is satisfied, the drawing section 53 stops reading and does not carry out drawing. On the other hand, in a case where the condition is not satisfied, the drawing section 53 carries out reading and drawing. In a case where the drawing is not carried out since the above-described condition is satisfied, the drawing may be carried out in response to an input of a password which is made by a person who is permitted to view and operate the page as described above.

Examples of the variable condition include a condition concerning a variable element such as a load factor of the CPU 11. In a case where the load factor of the CPU 11 is high, there is a high possibility of affecting a process that the CPU 11 is to carry out preferentially over a drawing process of the drawing section 53. Therefore, in a case where the condition that the load ratio of the CPU 11 is not less than the predetermined value is satisfied, the drawing section 53 stops reading and does not carry out drawing. In contrast, in a case where the condition is not satisfied, the drawing section 53 carries out reading and drawing.

The various conditions as described above are set by a system designer of the operation display device 1 when a search word is set. The conditions may be set by a user as an operation setting of the browsing section 5 when the operation display device 1 is in operation.

The operation processing section 54 carries out tab switching in a case where a link corresponding to a page to be displayed after switching is registered in the ID list L2 created by the specifying section 52. Specifically, the operation processing section 54 switches the foreground tab T1 to one selected from the group consisting of one or more background tabs T2 on each of which a switching candidate page is drawn in the display memory 14. On the background tab T2 to which the foreground tab T1 is to be switched, a switching candidate page specified by a touch operation that is received by the touch panel 15 is drawn. The operation processing section 54 causes the display panel 16 to display the page that is drawn, in the display memory 14, on the background tab T2 to which the foreground tab T1 is switched.

The operation processing section 54 acquires, from the server device 2, page data PD corresponding to a touch operation, in a case where the tab ID corresponding to the page to be displayed after switching is not registered in the ID list L2 created by the specifying section 52. The operation processing section 54 causes the display panel 16 to display a page to be displayed after switching, on the basis of the page data PD acquired.

In a case where a control instruction to the control device 3 is given in response to an operation on the touch panel 15 which is carried out by a user on the page being displayed on the display panel 16, the operation processing section 54 notifies the server device 2 of the control instruction. On the receipt of updated page data PD from the server device 2, the operation processing section 54 causes the display panel 16 to display a page on the basis of the updated page data PD.

Next, the following will discuss a functional configuration of the server device 2.

The server device 2 includes a Web server section 7 and an HMI control section 8.

In response to a request made by the drawing section 53 of the operation display device 1 for page data PD on the basis of the acquisition information, the Web server section 7 carries out a process to acquire, from the page data PD stored in the auxiliary storage device 24, the page data PD which has been requested; and transmit, to the operation display device 1, the page data PD acquired. In addition, on the receipt of a control instruction from the operation processing section 54 of the operation display device 1, the Web server section 7 transmits the control instruction to the HMI control section 8. Further, the Web server section 7 also carries out a process to: rewrite, on the basis of updated data that is from the control device 3 and that has been acquired from the HMI control section 8, the content of page data PD which corresponds to the updated data and which is in the auxiliary storage device 24; and transmit, to the operation display device 1, the page data PD thus updated.

On the basis of the above control instruction, the HMI control section 8 instructs, via the interface section 26, the control device 3 to rewrite the content of the device memory. The HMI control section 8 acquires the above-described updated data in which the content of the device memory is updated and which is periodically transmitted from the control device 3, and transfers the updated data to the Web server section 7.

### <Drawing process on background tab>

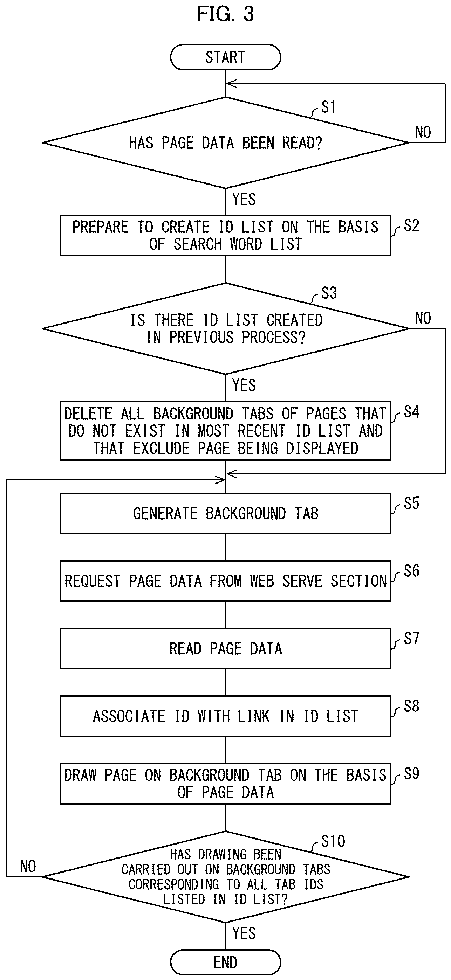

Fig. 3 is a flowchart showing a procedure of a process (display control method) in which a switching candidate page that may be displayed is drawn in advance on the background tab T2 by the browsing section 5 of the operation display device 1. Fig. 4 is a diagram illustrating a procedure according to which the operation display device 1 creates the ID list L2 on the basis of the search word list L 1.

First, as illustrated in Fig. 3, in order to cause the foreground tab T1 to display a page, the specifying section 52 determines whether page data PD is read by the display memory 14 (Step S1). Here, reading of the page data PD by the display memory 14 means reading the page data PD of the foreground tab T1 as screen data. In a case where the switching process of a tab described later is carried out at a stage where the reading of the page data PD for the foreground tab T1 has not been completed, the process of displaying the page on the foreground tab T1 becomes slower. Therefore, the display memory 14 first reads the page data PD for the foreground tab T1. Then, in Step S1, the specifying section 52 determines that the reading has been carried out.

Note that the page data PD read here by the display memory 14 may be data in the HTML format or may be display data constituting a page.

In a case where the specifying section 52 does not determine in Step S1 that the page data PD has been read (NO), the specifying section 52 continues to carry out such determination. Further, in Step S1, when the specifying section 52 determines that the page data PD has been read (YES), the specifying section 52 prepares to create an ID list L2 on the basis of the search word list L1 (Step S2).

As illustrated in Fig. 4, in creating the ID list L2, the specifying section 52 searches the page data PD (HTML file), which has been read, for a search word registered in the search word list L1. In Step S2, as a result of this search, the specifying section 52 extracts a link specified by "a href tag" which is a tag of an anchor link for jumping to a specified page in the page data PD, and writes the link in the ID list L2. At this time point, the tab ID of the background tab T2 has not yet been registered in the ID list L2.

In the example illustrated in Fig. 4, for the search word "screen switching SW?", the specifying section 52 extracts three character strings from the URL of the HTML file on the basis of "?" which is a wild card. The specifying section 52 registers, in the ID list L2, "page1.html" and "page2.html" which are links included in the character strings that have been extracted.

Then, the specifying section 52 determines whether or not there exists an ID list L2 created in a previous page switching process (Step S3). In a case where a drawing process to the background tab T2 has been carried out several times previously, the ID list L2 is created for each of such drawing processes. In such a case, the specifying section 52 determines that there is a corresponding ID list L2 created in the past (YES). In this case, the drawing section 53 deletes all of background tabs T2 of pages that existed in the ID list L2 created in the past, but that do not exist in the ID list L2 which is most recently created and that exclude the page which is being presently displayed on the foreground tab T1 (Step S4). Since those pages are irrelevant to the page to be displayed after switching, it is preferable to delete the background tabs T2 of the pages.

In Step S3, the drawing section 53 compares, for example, the character strings (for example, "page 1") of the links registered in the ID list L2 that is being created, with character strings of links in the ID list L2 that was created in the past. In a case where the character strings of the above two ID lists L2 do not match each other, the drawing section 53 deletes a background tab T2 corresponding to an unmatched character string in the ID list L2 that has already been created. On the other hand, in a case where the character strings of the above two ID lists L2 match each other, the drawing section 53 deletes no background tab T2 that corresponds to a matched character string in the ID list L2 that has already been created.

Then, the drawing section 53 generates the background tab T2 in the display memory 14 (Step S5). Further, the drawing section 53 requests, from the Web server section 7 of the server device 2, the page data PD necessary for the background tab T2 which has been generated, on the basis of a link registered in the ID list L2 (Step S6). In Step S5, the drawing section 53 makes an inquiry to the specifying section 52 as to the page data PD to be read out. Then, the specifying section 52 specifies the page data PD of a switching candidate, on the basis of a link corresponding to the search word in the search word list L1 (specifying step). The drawing section 53 acquires the page data PD transmitted from the server device 2 in response to the request for the page data PD specified. Then, the drawing section 53 reads the page data PD in the display memory 14 (Step S7).

Upon completion of reading of the page data PD, the specifying section 52 registers, in the ID list L2, the tab ID for the background tab T2 generated, and associates the tab ID with the link (Step S8). In this way, the specifying section 52 advances creation of the ID list L2.

Then, the drawing section 53 draws a page on the background tab T2 on the basis of the page data PD acquired (Step S9, drawing step). In drawing the page, the drawing section 53 acquires, from the ID list L2, the tab ID corresponding to the page data PD acquired, and draws the page on the background tab T2 corresponding to the tab ID.

Thereafter, the drawing section 53 determines whether or not drawing has been carried out on the background tab T2 of each of all the tab IDs listed in the ID list L2 (Step 10). In a case where in Step S10, the drawing section 53 determines that the drawing has been carried out on the background tabs of all the tab IDs listed in the ID list L2 (YES), the drawing section 53 ends the process. On the other hand, in a case where the drawing section 53 determines otherwise (NO), the drawing section 53 shifts the process to Step S5. In addition, in a case where in Step S3, the specifying section 52 determines that there exists no ID list L2 created in the previous page switching process (NO), the specifying section 52 shifts the process to Step S5. In this way, the drawing section 53 carries out, for each page, a series of processes of generating a background tab T2 and drawing the page on the background tab T2.

### <Tab switching process>

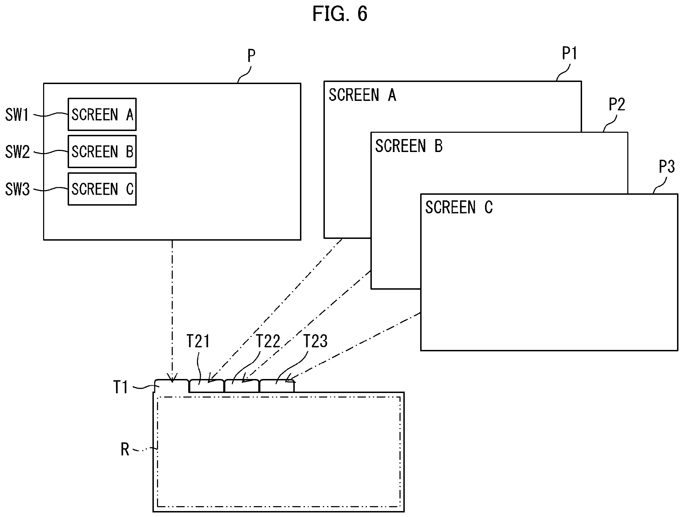

Fig. 5 is a flowchart showing a procedure of a process in which page switching is carried out by the browsing section 5. Fig. 6 is a diagram for illustrating page switching.

As illustrated in Fig. 5, when a touch operation for switching a page is carried out on the touch panel 15, the operation processing section 54 determines whether or not the tab ID corresponding to a page to be displayed after switching is registered in the ID list (Step S11). In a case where in Step S11, the operation processing section 54 determines that the tab ID corresponding to the page to be displayed after switching is registered in the ID list (YES), the touch operation is invalidated and the page of the background tab T2 corresponding to the tab ID is switched to be displayed on the foreground (Step S12), and the process is ended.

Further, in a case where in Step S11, the operation processing section 54 determines that the tab ID corresponding to the page to be displayed after switching is not registered in the ID list (NO), the page is switched in response to the touch operation (Step S13), and the process is ended. The operation processing section 54 requests, from the server device 2, page data PD having a file name specified by a link that has been set in an object which is subjected to the touch operation. The operation processing section 54 causes the display panel 16 to display the page on the basis of the page data PD provided from the server device 2 in response to the above request.

Note that as described above, in a case where the specifying section 52 registers the tab ID in advance in the ID list L2, a flag indicating completion of reading of the page data PD is provided in the ID list L2 by the specifying section 52. In this case, the operation processing section 54 confirms that the flag is ON and then carries out tab switching. However, if the flag is not ON, the operation processing section 54 does not carry out tab switching.

For example, as illustrated in Fig. 6, the following are assumed: a page P is drawn on the foreground tab T1; and pages P1 to P3 (switching candidate screens) having respective names of "Screen A", "Screen B" and "Screen C" are drawn on background tabs T21 to T23, respectively. The page P includes switches SW1 to SW3 as objects. The switch SW1 is a switch component for switching to "Screen A". The switch SW2 is a switch component for switching to "Screen B". The switch SW3 is a switch component for switching to "Screen C".

Note that, in Fig. 6, for easy understanding, respective projecting top portions are provided to the foreground tab T1 and the background tabs T21 to T23. Note however that, in practical use, such a tab portion may not be displayed.

Here, assume a case where, when on the page P, the switch SW1 is subjected to a touch operation, a tab ID corresponding to the page P1 is registered in the ID list L2. In this case, the operation processing section 54 switches the foreground tab T1 to the background tab T21. Thus, the background tab T21 becomes a new foreground tab T1.

On the other hand, assume a case where, on the page P, the switch SW1 is subjected to a touch operation, the tab ID corresponding to the page P1 is not registered in the ID list L2. In this case, the operation processing section 54 acquires the page data PD of the page P1 from the server device 2 in response to the touch operation. The operation processing section 54 draws, as the page P1 and on the foreground tab T1, the page data PD that has been acquired, and causes the page P1, which has been drawn, to be displayed in an effective display region R of the display panel 16.

### <Effects of embodiment>

The browsing section 5 of the operation display device 1 includes the specifying section 52 and the drawing section 53. The specifying section 52 specifies, on the basis of a link in the ID list L2 created on the basis of a search word in the search word list L1, at least one switching candidate page to which the page being displayed on the foreground tab T1 can be switched. The drawing section 53 draws, on the background tab T2, the switching candidate page specified. In this configuration, the switching candidate page drawn on the background tab T2 can be selected by setting the search word list L1.

The specifying section 52 has a function of setting a link in the ID list L2. In this configuration, each time a page is displayed on the foreground tab T 1, a link is automatically set. Then, on the basis of the page data PD acquired on the basis of the link in the ID list L2, the switching candidate page is drawn on the background tab T2 which has been generated. In a case where the search word list L1 is set in advance, it is possible to prepare the switching candidate page on the background tab T2 according to the link that has been set on the basis of the search word list L1.

The specifying section 52 determines whether or not there exists an ID list L2 that has been created in a previous page switching process. In a case where there exists the ID list L2 that has been created in the past, the drawing section 53 deletes all of background tabs T2 on which the following pages excluding a page being displayed on the foreground tab T1 are drawn: pages corresponding to links that existed in the ID list L2 created in the past but that do not exist in the ID list L2 which is most recently created.

As a result, the background tabs T2 of the pages that are irrelevant to the page to be displayed after switching are deleted. Therefore, it is possible to avoid a decrease in the usage capacity of the display memory 14 due to those unnecessary background tabs T2. This makes it possible to effectively utilize the display memory 14.

The drawing section 53 does not draw the switching candidate page in a case where a predetermined condition is satisfied, whereas the drawing section 53 draws the switching candidate page in a case where the predetermined condition is not satisfied. In this configuration, by setting a predetermined condition in advance for, for example, a case where a disadvantage may occur due to drawing, the disadvantage can be avoided. As the predetermined condition, it is possible to set any of various conditions as described above. This makes it possible to deal with a variety of disadvantages.

The browsing section 5 of the operation display device 1 includes the operation processing section 54. In a case where the ID list L2 includes the tab ID corresponding to the switching candidate page specified by the touch operation received by the touch panel 15, the operation processing section 54 switches the foreground tab T1 to the background tab T2 on which the switching candidate page is drawn. As a result, it is possible to display a desired switching candidate page among selected switching candidate pages, by switching a tab of the desired switching candidate page from the background tab T2 to the foreground tab T1.

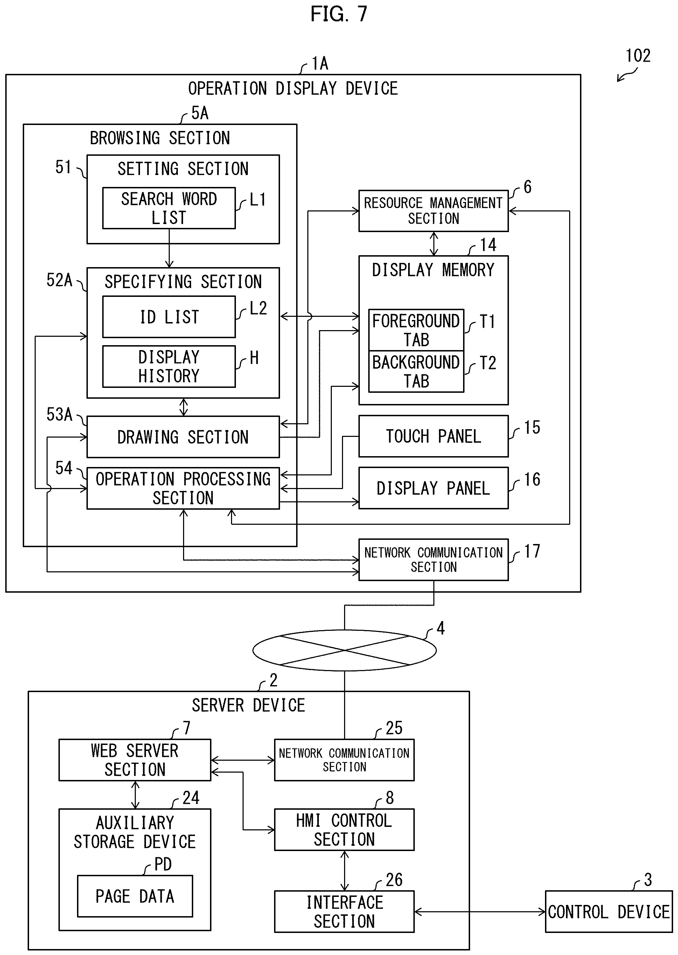

The operation display device 1 includes the display panel 16 and the browsing section 5 that controls display of a page on the display panel 16. Thus, in the operation display device 1, it is possible to select desired pages as switching candidate pages. Then, it is possible to switch a page being displayed to one selected from the group consisting of the switching candidate pages selected above. This also applies to an operation display device 1A (see Fig. 7) of Embodiment 2 described later.

### <Configuration form of operation display device>

The browsing section 5 has high usage rates of the CPU 11 and the main memory 12. Therefore, in a case where the operation display device 1 is configured as an embedded device, it is desirable to limit processing of the OS to an operation of the browsing section 5. Therefore, the operation display device 1 serving as an embedded device functions as a browsing-dedicated terminal. The same applies to Embodiment 2 described later.

Note that the HMI control section 8 is provided in the server device 2 in the present embodiment, but may alternatively be provided in the operation display device 1. Note however that, in a case where the HMI control section 8 is provided in the operation display device 1, the performance of the operation display device 1 deteriorates. Therefore, it is preferable that the HMI control section 8 be provided in the server device 2 rather than in the operation display device 1. The same applies to Embodiment 2 described later.

### Embodiment 2

The following description will discuss Embodiment 2 of the present invention in detail. Note that in Embodiment 2, components having functions identical to those of the respective components described in Embodiment 1 are given respective identical reference numerals, and descriptions of those components will be omitted as appropriate.

### <Configuration of operation display system>

Fig. 1 is a block diagram illustrating a hardware configuration of an operation display system 102 in accordance with each of Embodiments 1 and 2. Fig. 7 is a block diagram illustrating a functional configuration of the operation display system 102 in accordance with Embodiment 2.

As illustrated in Fig. 1, the operation display system 102 includes an operation display device 1A, a server device 2, and a control device 3. As illustrated in Fig. 7, the operation display device 1A includes a browsing section 5A, in place of the browsing section 5 of the operation display device 1 in the operation display system 101 according to Embodiment 1, and also includes a resource management section 6.

The browsing section 5A includes a setting section 51 and an operation processing section 54, in the same manner as the browsing section 5. However, the browsing section 5A includes a specifying section 52A and a drawing section 53A in place of the specifying section 52 and the drawing section 53 of the browsing section 5, respectively. In addition, in the search word list L1 managed by the setting section 51, each of search words may be given a degree of priority. The operation display device 1A includes the browsing section 5A, and thus functions as a display control device that controls a display panel 16.

The specifying section 52A has the same function as the specifying section 52, and also manages a display history H. The display history H is a history of display of a page on the foreground tab T1. The specifying section 52A creates the display history H, for example, by associating a link of page data PD of the page, which is acquired from an ID list L2, with the date of display of the page. The specifying section 52A gives, to a file name registered in the ID list L2, a higher degree of priority in the order of the newest to oldest dates on the basis of the display history H in a predetermined period. Alternatively, the specifying section 52A gives, to the a file name registered in the ID list L2, a degree of priority according to a degree of priority given to each of the search words in the search word list L1.

The resource management section 6 manages, for each process being executed in the operation display device 1A, a usage status of the display memory 14 that changes from moment to moment as a usage capacity of the display memory 14. The resource management section 6 is provided so as a function of an OS.

Note that a shared memory configuration such as unified memory architecture (UMA) in which a part of a main memory 12 is used as the display memory 14 may be applied to the operation display device 1A. In such a configuration, when the usage capacity of a display memory region constituting the display memory 14 in the main memory 12 increases, the capacity of the main memory 12 to be used by the CPU 11 for executing an application program or the like becomes insufficient. In this case, the resource management section 6 manages the usage capacity of the display memory region in the main memory 12.

The drawing section 53A draws, in the descending order of priority, switching candidate pages on background tabs T2. For example, the drawing section 53A draws, in the descending order of priority given to each of the switching candidate pages, the switching candidate pages on the background tabs T2 on the basis of the display history H. Alternatively, the drawing section 53A draws, in the descending order of priority given to each of the search words in the search word list L1, the switching candidate pages on the background tabs T2.

The drawing section 53A monitors the usage capacity of the display memory 14 that is managed by the resource management section 6 and that is to be used for display of a page on the foreground tab T1 and display of a switching candidate page on the background tab T2. In a case where the usage capacity of the display memory 14 exceeds a predetermined upper limit value, the drawing section 53A does not draw a switching candidate page whose degree of priority given to each of the switching candidate pages (links) in the ID list L2 is lower than a predetermined degree of priority.

With regard to the above degrees of priority, for example, the degree of priority of the switching candidate page described in a top row of the ID list L2 is highest, and the degree of priory becomes lower in a lower column. How the degree of priority is given is not limited to this example.

In a case where the usage capacity of the display memory 14 exceeds the predetermined upper limit value, the drawing section 53A deletes a background tab T2 on which a switching candidate page that existed in the ID list L2 created in the past but that does not exist in the ID list L2 most recently created is drawn. On the other hand, in a case where the usage capacity of the display memory 14 is not more than the upper limit value, the drawing section 53A does not delete any background tab T2 on which a switching candidate page is drawn. The usage capacity of the display memory 14 here is a usage capacity of the display memory 14 that is to be used for display of a page on the foreground tab T1 and for display of a switching candidate page on the background tab T2.

### <Drawing process on background tab>

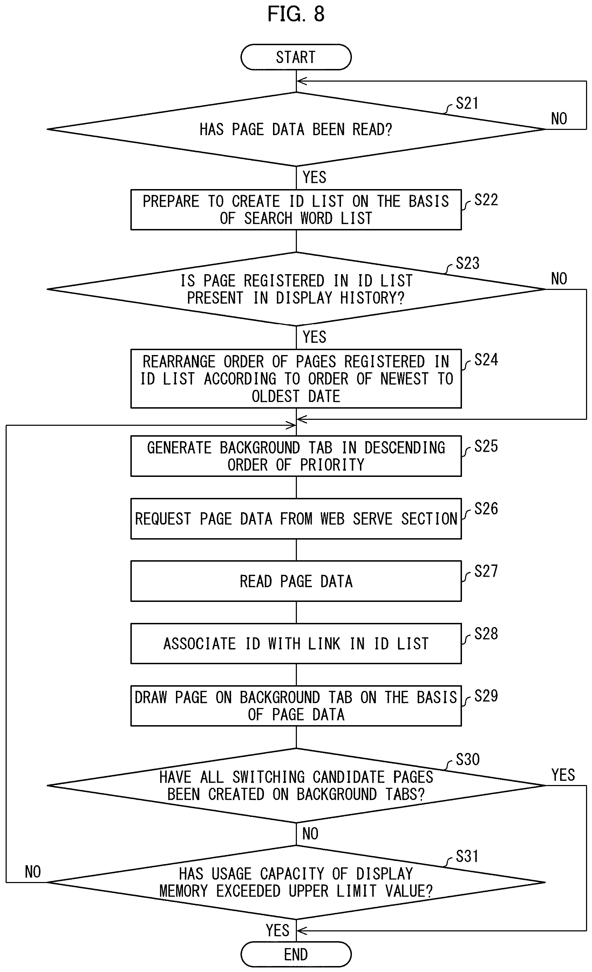

Fig. 8 is a flowchart showing a procedure of a process (display control method) in which a switching candidate page that may be displayed is drawn in advance on the background tab T2 by the browsing section 5A of the operation display device 1A. Fig. 9 is a diagram illustrating a procedure according to which the operation display device 1A creates the ID list L2 on the basis of the search word list L1.

First, as illustrated in Fig. 8, in Steps S21 and S22, the specifying section 52A carries out the same processing as processing that is carried out in Steps S1 and S2, respectively, by the specifying section 52 illustrated in Fig. 3.

Then, the specifying section 52A determines whether or not a page registered in the ID list L2 is in the display history H (Step S23). In Step S23, in a case where the specifying section 52A determines that the page registered in the ID list L2 is in the display history H (YES), the specifying section 52A rearranges the order of the pages in the ID list L2, according to a new order of the newest to oldest dates (Step S24). In the processing of Step S24, the specifying section 52A determines that a page whose date of display is newer in the display history H is given a higher degree of priority. Then, the specifying section 52A rearranges the order of the file names in the ID list L2 according to the order of the newest to oldest dates. In the ID list L2, the file name whose date is newer is positioned higher.

Subsequently, the drawing section 53A generates the background tab T2 in the display memory 14 in the descending order of the degree of priority given to each of the links (switching candidate pages) in the ID list L2 (Step S25). Further, the drawing section 53A requests, from the Web server section 7 of the server device 2, the page data PD necessary for the background tab T2 which has been generated, on the basis of the link registered in the ID list L2 (Step S26). The drawing section 53A acquires the page data PD transmitted from the server device 2 in response to the above request and reads the page data PD in the display memory 14 (Step S27).

Upon completion of reading of the page data PD, the specifying section 52A registers, in the ID list L2, the tab ID for the background tab T2 generated, and associates the tab ID with a link (Step S28). In this way, the drawing section 53A advances creation of the ID list L2. The drawing section 53A draws a page on the background tab T2 on the basis of the page data PD acquired (Step S29). Thus, the pages are drawn in the descending order of priority.

Then, the drawing section 53A determines whether or not all the switching candidate pages are created on the background tabs T2 (Step S30). In a case where in Step S30, the drawing section 53A determines that all the switching candidate pages are not created on the background tabs T2 (NO), the drawing section 53A determines whether or not the usage capacity of the display memory 14 exceeds the upper limit value (Step S31). On the other hand, in a case where in Step S30, the drawing section 53A determines that all the switching candidate pages are created on the background tabs T2 (YES), the drawing section 53A ends the process. In addition, in a case where in Step S31, the drawing section 53A determines that the usage capacity of the display memory 14 exceeds the upper limit value (YES), the drawing section 53A ends the process and stops drawing.

Note that when in Step S31, the drawing section 53A determines that the usage capacity of the display memory 14 exceeds the upper limit value (YES), the drawing section 53A may delete, with reference to the ID list L2, the background tabs T2 of old pages that do not exist in the ID list L2. In this case, unless the drawing section 53A determines that the usage capacity of the display memory 14 exceeds the upper limit value, the drawing section 53A does not delete any background tabs T2 of the old pages that do not exist in the ID list L2.

In a case where in Step S23, the specifying section 52A determines that the page registered in the ID list L2 is not in the display history H (NO), the specifying section 52A shifts the process to Step S25. When in Step S31, the drawing section 53A determines that the usage capacity of the display memory 14 does not exceed the upper limit value (NO), the drawing section 53A shifts the process to step S25. Then, the drawing section 53A carries out a series of processes of generating the background tab T2 of the next highest degree of priority and drawing the page on the background tab T2. In this way, the drawing section 53A carries out, for each page in the descending order of priority, a series of processes of generating the background tab T2, drawing a page on the background tab T2, and determining whether or not the usage capacity of the display memory 14 exceeds the upper limit value.

In the above-described processing, instead of the processing in Steps S23 and S24, the specifying section 52A may rearrange the order of the pages in the ID list L2 according to the degrees of priority of the search words in the search word list L1.

For example, as illustrated in Fig. 9, it is assumed that the degrees of priority of the search words registered in the search word list L1 are set in the order of "history display SW03", "graph display SW??", and "screen switching SW?". In creating the ID list L2, the specifying section 52A creates the ID list L2 in the same process as the specifying section 52 creates the ID list L2 in Embodiment 1. However, after the file name and the tab ID of the background tab T2 are associated with each other, the specifying section 52A rearranges the order of the file names in accordance with the degrees of priority of the search words.

In the example illustrated in Fig. 9, the specifying section 52A associates the file name with the tab ID in the search order of the HTML file, that is, in the order of the file names "page1.html", "page2.html", "page4.html", and "page5.html". Upon completion of such association, the specifying section 52A rearranges the order of the file names in the ID list L2 according to the degrees of priority of the search words, as illustrated in Fig. 9. Specifically, the specifying section 52A rearranges the order of file names so that the order of file names become "page5.html", "page4.html", "page1.html", and "page2.html".

### <Effects of embodiment>

The browsing section 5A of the operation display device 1A includes the specifying section 52A and the drawing section 53A. The drawing section 53A draws, in the descending order of priority given to each of switching candidate pages, the switching candidate pages on the background tabs T2. Thus, by giving the degree of priority to each of the switching candidate pages in advance, the switching candidate pages are drawn in the descending order of priority. Therefore, when a large number of switching candidate pages are to be drawn, it is possible to increase the possibility of executing drawing of a switching candidate page having a high degree of priority even in a state in which drawing of the switching candidate pages is forced to be suspended due to an increase in usage capacity of the display memory 14.

The drawing section 53A draws the switching candidate pages in the descending order of priority given to each of the switching candidate pages in the ID list L2. Then, the usage capacity of the display memory 14 described above is compared with a predetermined upper limit value every time one switching candidate page is drawn. In a case where the usage capacity of the display memory 14 exceeds the predetermined upper limit value, the drawing section 53A stops drawing the switching candidate pages. Accordingly, it is possible to reduce the usage capacity of the display memory 14 in a case where the switching candidate pages are drawn. This makes it possible to effectively utilize the display memory 14.

In a case where the usage capacity of the display memory 14 exceeds the predetermined upper limit value, the drawing section 53A deletes a background tab T2 on which a switching candidate page that existed in the list L2 created in the past ID but that does not exist in the ID list L2 most recently created is drawn. On the other hand, in a case where the usage capacity is not more than the upper limit value, the drawing section 53A does not delete any background tab T2 on which a switching candidate page is drawn. Accordingly, in a case where the usage capacity of the display memory 14 exceeds the upper limit value, the background tab T2 that has been drawn in the past and that is no longer necessary is deleted. Therefore, it is possible to reduce the usage capacity of the display memory 14. This makes it possible to effectively utilize the usage capacity of the display memory 14.

### [Software Implementation Example]

Functions of the operation display device 1, 1A (hereinafter, simply referred to as "device") can be realized by a program for causing the device to operate, the program causing the device to function as each section included in the browsing section 5, 5A. Thus, the device includes, as hardware for executing the above program, at least one CPU 11 and at least one main memory 12. The foregoing functions described in the above Embodiments 1 and 2 are realized by executing the program by the at least one CPU 11 and the at least one main memory 12.

The program can be stored in one or more non-transitory computer-readable storage media. The storage media may or may not be provided in the device. In the latter case, the program may be supplied to or made available to the device via any wired or wireless transmission medium.

Further, a part or all of the browsing section 5, 5A can be realized by a logic circuit. For example, an embodiment of the present invention encompasses, in its scope, an integrated circuit in which a logic circuit that functions as the foregoing browsing section 5, 5A is formed.

Aspects of the present invention can also be expressed as follows:
A display control device in accordance with aspect 1 of the present invention includes a control section configured to control a display device so as to cause a screen to be displayed, by a browsing function, in a first page region which is a page region on a foreground, the control section including: a specifying section configured to specify one or more switching candidate screens on the basis of screen specification information that specifies the switching candidate screens, the switching candidate screens each being a screen to which it is possible to switch the screen being displayed in the first page region; and a drawing section configured to draw the switching candidate screens specified by the specifying section, in one or more second page regions each of which is provided on a background of the first page region.

The above configuration makes it possible to specify a switching candidate screen by screen specification information. This makes it possible to select the switching candidate screen to be drawn in a second page region.

A display control device in accordance with aspect 2 of the present invention may be configured such that, in to aspect 1, in a case where a screen is to be displayed in the first page region, the specifying section sets acquisition information for acquiring the switching candidate screens on the basis of the screen specification information; and the drawing section draws, in the second page regions, the switching candidate screens acquired on the basis of the acquisition information.

According to the above configuration, acquisition information is automatically set every time a screen is displayed in the first page region, and in the second page region, a switching candidate screen acquired on the basis of the acquisition information is drawn. Therefore, if the acquisition information is set in advance, it is possible to prepare, on the basis of the acquisition information, the switching candidate screen in the second page region.

A display control device in accordance with aspect 3 of the present invention may be configured such that, in aspect 1 or 2, the drawing section draws, in the second page regions, the switching candidate screens in the descending order of priority. For example, the drawing section may draw, in the second page regions and on the basis of the display history of screens having been displayed in the first page region in the past, the switching candidate screens in the descending order of priority given to each of the switching candidate screens. Alternatively, the drawing section may draw, in the descending order of priority given to each of pieces of the screen specification information, the switching candidate screens in the second page regions.

According to the above configuration, for example, on the basis of the display history, it is possible to preferentially display, in the second page region, a screen that is displayed at a high frequency. Further, by giving the degree of priority to each of the pieces of the screen specification information in advance, switching candidate screens are drawn in the descending order of priority. Therefore, when a large number of switching candidate screens are to be drawn, it is possible to increase the possibility of executing drawing of a switching candidate screen having a high degree of priority even in a state in which drawing of the switching candidate screens is forced to be suspended due to an increase in usage capacity of a memory.

A display control device in accordance with aspect 4 of the present invention may be configured to further include, in aspect 2, a memory used in drawing the switching candidate screens in the second page regions, the specifying section creating a list of pieces of the acquisition information corresponding to the switching candidate screens, and the drawing section drawing the switching candidate screens in the descending order of priority given to each of the switching candidate screens in the list, comparing a usage capacity of the memory with a predetermined upper limit value every time one of the switching candidate screens is drawn, and stopping drawing when the usage capacity exceeds the upper limit value.

According to the above configuration, in a case where the usage capacity of the memory exceeds the upper limit value, the drawing section stops drawing the switching candidate screens. Accordingly, it is possible to reduce the usage capacity of the memory in a case where the switching candidate screens are drawn. This makes it possible to effectively utilize the memory.

A display control device in accordance with aspect 5 of the present invention may be configured to further include, in aspect 2, a memory used in drawing the switching candidate screens in the second page regions, the specifying section creating a list of pieces of the acquisition information corresponding to the switching candidate screens, and the drawing section deleting one or more of the second page regions in which the switching candidate screens are drawn in a case where the usage capacity of the memory exceeds a predetermined upper limit value, whereas in a case where the usage capacity of the memory is not more than the upper limit value, the drawing section does not delete any of the second page regions in which the switching candidate screens are drawn, the one or more of the second page regions being each a second page region in which a switching candidate screen corresponding to the acquisition information that existed in the list created in the past but that does not exist in the list most recently created is drawn.

According to the above configuration, in a case where the usage capacity of the memory exceeds the upper limit value, the second page region that has been drawn in the past and that is no longer necessary is deleted. This makes it possible to reduce the usage capacity of the memory. Therefore, it is possible to effectively utilize the memory.

A display control device in accordance with aspect 6 of the present invention may be configured such that, in aspect 2, the specifying section creates a list of pieces of the acquisition information corresponding to the switching candidate screens, and also determines whether the list created in the past exists; and in a case where it is determined that the list created in the past exists, the drawing section compares the acquisition information in the list most recently created with the acquisition information in the list created in the past, and deletes one or more of the second page regions, the one or more of the second page regions being each a second page region in which a switching candidate screen specified by the acquisition information that existed in the list created in the past but that does not exist in the list most recently created is drawn.

According to the above configuration, the second page region, in which a switching candidate screen irrelevant to the screen to be displayed after switching is drawn, is deleted. This makes it possible to avoid a decrease, due to such an unnecessary second page region, in the usage capacity of the memory for displaying the second page regions. Therefore, it is possible to effectively utilize the memory.

A display control device in accordance with aspect 7 of the present invention may be configured such that, in any one of aspects 1 to 6, the drawing section does not draw the switching candidate screens in a case where a predetermined condition is satisfied, whereas the drawing section draws the switching candidate screens in a case where the predetermined condition is not satisfied.

According to the above configuration, by setting a predetermined condition in advance for, for example, a case where a disadvantage may occur due to drawing, the disadvantage can be avoided.

A display control device according to aspect 8 of the present invention is configured to further include, in any one of aspects 1 to 7, an operation section configured to receive an operation that specifies one of the switching candidate screens, the specifying section creating a list of pieces of acquisition information corresponding to the switching candidate screens, and the control section including a switching section which, in a case where the list includes region specification information corresponding to the one switching candidate screen specified by the operation that is received by the operation section, switches the first page region to one of the second page regions, the one switching candidate screen being drawn in the one second page region.

According to the above configuration, it is possible to display a desired switching candidate screen among selected switching candidate screens, by switching a region of the desired switching candidate screen from the second page region to the first page region.

An operation display device according to aspect 9 of the present invention includes: a display control device according to aspect 8; and a display device configured to be controlled by the display control device.

According to the above configuration, in the operation display device, it is possible to select desired screens as switching candidate screens. Then, it is possible to switch the screen being displayed to one selected from the group consisting of the switching candidate screens that have been selected.

A display control method in accordance with aspect 10 of the present invention is a display control method configured to control a display device so as to cause a screen to be displayed, by a browsing function, in a first page region which is a page region on a foreground, the method including: a specifying step of specifying one or more switching candidate screens on the basis of screen specification information that specifies the switching candidate screens, the switching candidate screens each being a screen to which it is possible to switch the screen being displayed in the first page region; and a drawing step of drawing the switching candidate screens specified in the specifying step, in one or more second page regions each of which is provided on a background of the first page region.

This makes it possible to select the switching candidate screen to be drawn in the second page region, as in the display control device in accordance with aspect 1.

### [Additional Remarks]

The present invention is not limited to the foregoing embodiments, but may be altered in various ways by a skilled person within the scope of the claims. For example, the present invention also encompasses, in its technical scope, any embodiment derived by appropriately combining respective technical means disclosed in differing example embodiments.

### Reference Signs List

1, 1A operation display device (display control device)
5 browsing section (control section)
14 display memory (memory)
15 touch panel (operation section)
16 display panel (display device)
52, 52A specifying section
53, 53A drawing section
54, 54A operation processing section (switching section)
L1 search word list (screen specification information)
L2 ID list (list)
P 1 to P3 page (switching candidate screen)
T 1 foreground tab (first page region)
T2, T21 to T23 background tab (second page region)

## Claims

1. A display control device comprising
a control section configured to control a display device so as to cause a screen to be displayed, by a browsing function, in a first page region which is a page region on a foreground,
the control section including:
a specifying section configured to specify one or more switching candidate screens on the basis of screen specification information that specifies the switching candidate screens, the switching candidate screens each being a screen to which it is possible to switch the screen being displayed in the first page region; and
a drawing section configured to draw the switching candidate screens specified by the specifying section, in one or more second page regions each of which is provided on a background of the first page region.

2. The display control device according to claim 1, wherein:
in a case where a screen is to be displayed in the first page region, the specifying section sets acquisition information for acquiring the switching candidate screens on the basis of the screen specification information; and
the drawing section draws, in the second page regions, the switching candidate screens acquired on the basis of the acquisition information.

3. The display control device according to claim 1 or 2, wherein the drawing section draws, in the second page regions, the switching candidate screens in the descending order of priority.

4. The display control device according to claim 2, further comprising
a memory used in drawing the switching candidate screens in the second page regions,
the specifying section creating a list of pieces of the acquisition information corresponding to the switching candidate screens, and
the drawing section drawing the switching candidate screens in the descending order of priority given to each of the pieces of the acquisition information in the list, comparing a usage capacity of the memory with a predetermined upper limit value every time one of the switching candidate screens is drawn, and stopping drawing when the usage capacity exceeds the upper limit value.

5. The display control device according to claim 2, further comprising
a memory used in drawing the switching candidate screens in the second page regions,
the specifying section creating a list of pieces of the acquisition information corresponding to the switching candidate screens, and
the drawing section deleting one or more of the second page regions in which the switching candidate screens are drawn in a case where the usage capacity of the memory exceeds a predetermined upper limit value, whereas in a case where the usage capacity of the memory is not more than the upper limit value, the drawing section does not delete any of the second page regions in which the switching candidate screens are drawn, the one or more of the second page regions being each a second page region in which a switching candidate screen corresponding to the acquisition information that existed in the list created in the past but that does not exist in the list most recently created is drawn.

6. The display control device according to claim 2, wherein:
the specifying section creates a list of pieces of the acquisition information corresponding to the switching candidate screens, and also determines whether the list created in the past exists; and
in a case where it is determined that the list created in the past exists, the drawing section compares the acquisition information in the list most recently created with the acquisition information in the list created in the past, and deletes one or more of the second page regions, the one or more of the second page regions being each a second page region in which a switching candidate screen specified by the acquisition information that existed in the list created in the past but that does not exist in the list most recently created is drawn.

7. The display control device according to any one of claims 1 to 6, wherein the drawing section does not draw the switching candidate screens in a case where a predetermined condition is satisfied, whereas the drawing section draws the switching candidate screens in a case where the predetermined condition is not satisfied.

8. The display control device according to any one of claims 1 to 7, further comprising
an operation section configured to receive an operation that specifies one of the switching candidate screens,
the specifying section creating a list of pieces of acquisition information corresponding to the switching candidate screens, and
the control section including a switching section which, in a case where the list includes region specification information corresponding to the one switching candidate screen specified by the operation that is received by the operation section, switches the first page region to one of the second page regions, the one switching candidate screen being drawn in the one second page region.

9. An operation display device comprising:
a display control device according to claim 8; and
a display device configured to be controlled by the display control device.

10. A display control method configured to control a display device so as to cause a screen to be displayed, by a browsing function, in a first page region which is a page region on a foreground, the method comprising:
a specifying step of specifying one or more switching candidate screens on the basis of screen specification information that specifies the switching candidate screens, the switching candidate screens each being a screen to which it is possible to switch the screen being displayed in the first page region; and
a drawing step of drawing the switching candidate screens specified in the specifying step, in one or more second page regions each of which is provided on a background of the first page region.
